# FASCICULE DE BREVET EUROPEEN

(11) **EP 1 948 337 B1**
(45) Date de publication et mention de la délivrance du brevet: **01.04.2009**
(21) Numéro de dépôt: 06820236.5
(22) Date de dépôt: 18.10.2006
(51) Int. Cl.: A63F 13/02

(54) **DISPOSITIF INTERACTIF POUR JEUX VIDEO**
INTERAKTIVE VORRICHTUNG FÜR VIDEOSPIELE
INTERACTIVE DEVICE FOR VIDEO GAMES

(30) Priorité: 21.10.2005 FR 0510780
(43) Date de publication de la demande: 30.07.2008
(73) Titulaire: Will International Ltd, Chertsey Surrey KT16 0DN (GB)
(72) Inventeur: CLAUDEL, Frédéric, F-75010 Paris (FR); NICOLAS, Frédéric, F-77250 Moret-sur-Loing (FR)
(74) Mandataire: Novagraaf IP
(86) Numéro de dépôt international: PCT/FR2006/002342
(87) Numéro de publication internationale: WO 2007/045765

(56) Documents cités:
- GB-A- 2 409 174
- JP-A- 2004 097 662
- US-A- 4 751 642
- US-A1- 2002 183 104

## Description

La présente invention se rapporte au domaine des dispositifs comportant des éléments captant certaines actions d'un utilisateur et transformant ces informations de manière à interagir avec un système d'imagerie et de sons tel qu'une télévision reliée à une station de jeu ou à une unité de traitement numérique. La présente invention se rapporte plus particulièrement à un dispositif pour la pratique interactive de l'activité sportive connue sous le nom de football ou « soccer ».

Le but principal de l'invention est de constituer un nouveau périphérique interactif ludique et sportif pour unité de traitement numérique comme par exemple les consoles de jeux vidéo ou les ordinateurs personnels, permettant de réaliser de manière innovante des parties interactives de football (ou « soccer »), notamment avec certains des programmes de football existants.

Les jeux de football existants sont généralement complexes et généralement caractérisés par la gestion par le joueur, de footballeurs virtuels pris un par un successivement au sein d'une équipe, des déplacements desdits footballeurs à l'aide de boutons directionnels spécifiques, du choix d'un type de frappes de balle parmi généralement quatre grandes catégories de frappes, de la prise en compte de l'intensité de la frappe caractérisée par le temps où le bouton déclenchant la frappe est maintenu pressé, de la prise en compte de la direction de la frappe généralement à l'aide d'un bouton directionnel et d'un certain nombre d'autres commandes déclenchant des variations de course, des feintes, des dribbles, des changements de stratégies des équipes, etc.

L'art antérieur connaît déjà des périphériques de jeux vidéo cherchant à augmenter les interactions ludiques et sportives pour un plus grand réalisme de la pratique des jeux vidéo de football.

On a vu ainsi se développer des accessoires de type « tapis » interactif comme décrit dans le brevet WO 0249731 (ESAAC COMM CO LTD - 2002). Ce brevet décrit un accessoire plan composé de différentes surfaces sensibles à la pression. En marchant sur ces surfaces, le joueur déplace son footballeur virtuel dans le jeu et lui fait faire des passes ou des dribbles.

Un autre type d'accessoires, décrit dans le brevet GB2409174 (FU CHEN GUO - 2005), se présente sous la forme d'une boite hémisphérique placée sur un tapis et comprenant un capteur et un récepteur infra-rouge. Ces derniers traduisent en coup de pied dans le jeu la réception d'un signal infra-rouge réfléchi sous le pied du joueur, lorsque ce pied passe au-dessus d'une fenêtre transparente de la boite contenant l'émetteur et le récepteur.

Dans ces deux exemples', et même si l'objectif de ces accessoires est d'obtenir un plus grand réalisme pour le joueur dans son interaction avec un logiciel représentant le jeu de football, le joueur n'a pas l'occasion de réaliser ce que les inventeurs du dispositif selon l'invention considèrent comme fondamental dans le jeu de football, c'est-à-dire frapper réellement dans un objet ayant une forme et une consistance proches de celles d'un ballon de football.

Le brevet JP7047156 (DAINIPPON PRINTING CO LTD - 1993) décrit une machine de jeu d'arcade permettant de simuler les tirs au football en proposant au joueur de frapper du pied sur une balle réelle qui se déplace sous l'effet du coup et dont la trajectoire de tir est contrôlée par un guide mécanique. Un autre accessoire avec une balle qui peut être déplacée est utilisé pour un produit de nom « Madden Football - Play Tv » de la société Radica. Ce dernier produit est utilisé pour un jeu dédié de « football américain » et non de football (ou « soccer ») et la balle est tenue à la main et non frappée au pied. Ces deux produits, différents dans leur allure générale, souffrent d'un inconvénient majeur similaire dans le dessein de leur application aux jeux vidéo de football ou « soccer » les plus populaires, qui tient en ce qu'une balle mobile empêche, par sa mobilité même, de réaliser plusieurs frappes de balle dans un court intervalle de temps, et donc l'exécution de passes de balle rapides entre les joueurs ; or ces actions sont essentielles dans les jeux de football existants les plus populaires sur consoles de jeux vidéo ou sur ordinateurs personnels et plus généralement dans un jeu de football nécessitant des actions rapides, précises et répétées.

Un autre accessoire qui est visible dans certaines salles de jeux se présente sous la forme d'une balle en mousse prolongée, à l'arrière de la zone de frappe de la balle, par une barre relativement fixe rattachée au corps de la machine d'arcade. Un coup de pied appliqué à la balle transmet sa force à la barre, ce qui permet son analyse en terme de direction et d'impact et est traduit en terme de trajectoire de balle sur l'écran de jeu. Cet accessoire fonctionne sur un jeu de football qui lui est dédié, où le jeu représente ce que verrait un joueur sur le terrain (vue dite subjective), où les trajectoires des balles frappées par le joueur sont toujours situées dans un cône dont l'axe de révolution est face à lui, et où les propriétés de la trajectoire ne dépendent que de l'intensité et de la direction de la frappe. Or dans les jeux de football populaires sur les consoles de jeu ou les ordinateurs personnels, la vue est non pas subjective mais de haut et en perspective, les trajectoires des balles frappées par le footballeur virtuel peuvent de fait être dans toutes les directions relativement au joueur. De plus, dans ces jeux, le joueur choisit le type de frappes qu'il souhaite réaliser (passe courte, passe longue, feinte de tir, lob, passe en avant où l'on envoie la balle devant le récepteur de la balle, balle avec effet, coups en arrière de type talonnades, etc.) de manière indépendante de l'intensité qu'il souhaite donner à cette frappe ou de la direction de cette dernière.

Voir aussi US-A-4 751 642.

D'autre part, les directions des tirs dans les logiciels de football les plus populaires sur les consoles de jeu ou sur les ordinateurs personnels sont contrôlées à l'aide de boutons directionnels spécifiques très précis car il s'agit d'un aspect du jeu demandant un contrôle particulièrement fin du joueur.

Enfin, d'autres actions importantes des logiciels de football les plus populaires consistent en des « pressions défensives » (lorsqu'un joueur de football en défense exerce une pression sur le possesseur du ballon) où des dribbles qui ne peuvent être réalisés au moyen de la balle des accessoires de l'art antérieur, retirant du réalisme à ces derniers.

La présente invention vise à remédier aux lacunes de l'art antérieur en l'association originale de quatre éléments : un objet relativement fixe ayant une forme proche de celle d'un ballon de football destiné à être frappé du pied par le joueur, des moyens appropriés localisant la zone d'application d'une force exercée par le pied du joueur sur ledit ballon, quantifiant l'intensité de celle-ci ainsi que l'amplitude de la course de la jambe ayant frappé ledit ballon, un module analysant les différentes informations précédentes, leur cohérence, et en déduisant le signal à envoyer à l'unité de traitement numérique à laquelle le dispositif selon l'invention est connecté ainsi que le temps d'émission dudit signal, et enfin des moyens de commande envoyant des signaux complémentaires à ceux décrits précédemment et en particulier des signaux directionnels.

Le dispositif selon l'invention permet de réaliser une pratique de type football (« soccer ») virtuel interactif en donnant au joueur l'impression de jouer au football car le joueur déclenche une frappe de balle dans le programme de football par une frappe réelle dans un objet ressemblant à un ballon de football. D'autre part, le dispositif selon l'invention permet de distinguer plusieurs catégories de frappes, adaptées à la nature du programme de football, dont l'intensité et la direction peuvent être évaluées indépendamment desdites catégories de frappes. De plus, la cadence d'exécution desdites frappes peut être soutenue. Une telle réalisation permettra de répondre de manière originale aux exigences des programmes de football. Enfin, le dispositif selon l'invention permet de réaliser d'autres types d'action de football, comme des pressions défensives ou des dribbles, par utilisation directe de l'objet ressemblant à un ballon de football, ajoutant au réalisme d'utilisation du dispositif.

Pour ce faire, la présente invention concerne un dispositif pour la pratique du football en association avec un système d'imagerie et de sons constituant le programme de football avec lequel interagit un utilisateur, comportant un objet assujetti au sol ayant une forme et des dimensions rappelant celles d'un ballon de football.

Selon un mode de réalisation, l'objet ayant une forme et des dimensions proches de celles d'un ballon de football, appelé par la suite « Ballon », sera composé ou doté d'une couche périphérique d'une matière de type mousse compacte et élastique, permettant de frapper le Ballon du pied sans créer de douleur.

Selon un mode de réalisation préférentiel, la couche périphérique du Ballon sera étanche à l'air et le Ballon sera gonflable.

Le Ballon sera relié au sol par un élément lui assurant un positionnement relativement fixe permettant à un joueur situé à proximité du Ballon d'effectuer des frappes répétées à une fréquence importante car le Ballon ne s'éloignera pas significativement du joueur après chaque frappe.

Avantageusement, le Ballon sera relié au sol par un élément autorisant au Ballon une mobilité réduite afin d'amortir les chocs dus aux frappes. Un mode de réalisation possible pourra être d'avoir un élément faisant une liaison élastique et semi-rigide entre le Ballon et un socle reposant au sol.

Selon un mode de réalisation, le Ballon sera placé dans un filet qui sera rattaché à sa base à un socle plat reposant au sol et assurant la stabilité de l'ensemble au sol.

Selon un autre mode de réalisation, le Ballon sera assujetti à un cylindre, d'axe perpendiculaire au sol, qui parcourra tout ou partie de l'intérieur du Ballon dans sa hauteur et qui sera joint à sa base à un socle.

Selon un mode de réalisation, la fixité au sol du Ballon sera assurée par le fait que le Ballon sera rendu solidaire d'un socle et que ledit socle sera solidaire d'une surface sur laquelle le joueur reposera son pied d'appui lorsqu'il frappera le Ballon de l'autre jambe.

Le Ballon sera pourvu d'un moyen indiquant la zone de localisation de l'application d'une force exercée sur sa surface. La surface du Ballon pourra ainsi être découpée en un certain nombre de zones de localisation. A chacune de ces zones de localisation sera associé un ensemble de signaux compatibles avec le jeu et relatifs à des frappes de balle.

Selon un mode de réalisation, le moyen indiquant la zone de localisation sera réalisé à l'aide du traitement différentiel des informations issues de capteurs de choc ou d'accélération, placés dans le Ballon solidairement à celui-ci et émettant un signal plus ou moins grand selon que la force qui leur est appliquée est plus ou moins alignée sur un axe de sensibilité qui leur est propre. Des capteurs de choc ou d'accélération disposés vers le centre du Ballon de manière à ce que leur axe de sensibilité soit perpendiculaire l'un à l'autre pourront, avec une approximation suffisante, être considérés comme définissant un repère orthonormé. Alors, en cas de force exercée sur le Ballon, les valeurs des signaux respectifs des capteurs donneront les coordonnées du vecteur de la force exercée sur le Ballon dans ledit repère, ce qui, en ramenant ce vecteur à la surface du Ballon, donnera une localisation de l'application de ladite force sur la surface du Ballon.

Selon un autre mode de réalisation, ce moyen sera réalisé en recouvrant la surface extérieure du Ballon d'une ou plusieurs surfaces spécifiques capables d'indiquer, de manière indépendante entre elle(s), si une pression est ou non exercée sur elle(s). Ces surfaces pourront ainsi définir des zones d'application d'une force exercée sur le Ballon.

Selon un mode de réalisation, de telles surfaces sont réalisées au moyen de surfaces sensibles à la pression. Une surface sensible à la pression est caractérisée par le fait que lorsque l'on exerce une pression mécanique sur une telle surface (pression du pied par exemple), il s'opère une modification des propriétés électriques de ladite surface comparativement à ses propriétés électriques lorsque aucune pression n'est exercée dessus. De telles surfaces peuvent agir notamment comme des interrupteurs tout ou rien actionnés par les pieds. Une modification classique des propriétés électriques de la surface consiste en la fermeture ou l'ouverture d'un circuit électrique selon que l'on exerce ou non une pression sur la surface. Dans ce cas, la surface sensible à la pression agit comme un interrupteur tout ou rien.

Avantageusement, ledit Ballon définira au moins deux zones de localisation de l'application d'une force exercée sur lui.

Avantageusement, les susdites zones de localisation composeront un partitionnement de la surface extérieure du Ballon.

Selon un mode de réalisation de l'invention, les zones de localisation sont disposées sur des surfaces définies par les chemins géométriques décrits par l'intersection de la surface du Ballon et d'un plan perpendiculaire au sol passant par le centre du Ballon lorsqu'il effectue des rotations dont l'axe de rotation est vertical et passe par le centre du Ballon. Autrement dit, les zones de localisation sont disposées suivant des « quartiers » verticaux sur la surface du Ballon. Un cas avantageux étant obtenu au cas où ces zones et les ensembles de signaux qui leurs sont rattachés sont identiques de part et d'autre d'un plan vertical passant par le centre du Ballon car alors ces zones sont disposées de manière similaire pour des joueurs droitiers ou gauchers.

Selon un autre mode de réalisation de l'invention, les zones de localisation sont disposées suivant des tranches découpant la surface du Ballon de manière parallèle au sol.

D'autres modes de réalisation de l'invention mettent en oeuvre d'autres moyens pour capter la localisation d'une force exercée sur la surface du Ballon. Sans que la liste qui suit soit exhaustive, un moyen consiste en des poches d'air ou de liquides insérées dans le Ballon à proximité de sa surface sous lesdits endroits et reliées à des capteurs de pression. Un autre moyen consiste en des capteurs de déformations placés juste sous la surface externe du Ballon sous lesdits endroits et qui se déclencheront au cas où la surface élastique du Ballon serait modifiée suite à une pression exercée sur elle. Un autre moyen consiste en ce que l'élément assujettissant le Ballon au sol ait la possibilité de s'incliner suivant plusieurs directions, et que certaines de ces directions soient rattachées à des capteurs d'inclinaison. Dès lors, au cas où une force serait exercée sur le Ballon, ce dernier s'incline dans la direction dans laquelle s'exerce la force. La zone du Ballon où s'exerce la force est alors définie comme étant la partie de sa surface opposée à la direction de son inclination. Un autre moyen consiste à munir la partie du socle se trouvant dans le secteur touché par le Ballon lorsque ce dernier se penche du fait d'une force exercée sur lui, de capteurs renvoyant une réponse relative à la pression qui leur est appliquée. Quatre capteurs disposés autour de l'axe du Ballon, dans le secteur indiqué, suivant quatre points équidistants, permettront de déterminer, par comparaison des intensités et des temps de leur réponse, la direction vers laquelle s'incline le Ballon.

Avantageusement, les ensembles de signaux associés aux zones du Ballon où s'exerce la force pourront être permutables de manière notamment à convenir aussi bien à des joueurs gauchers que droitiers.

Le dispositif selon l'invention comprendra un moyen permettant de quantifier l'intensité de la force éventuellement appliquée au Ballon. La plage des valeurs possibles de cette intensité sera divisée en intervalles et à chacun de ces intervalles sera associé un ensemble de signaux compatibles avec le jeu et relatifs à des frappes de balle.

Selon un mode de réalisation de l'invention, le susdit moyen sera un ou plusieurs capteurs placés à l'intérieur du Ballon et rendus solidaires des mouvements de ce dernier.

Selon un mode de réalisation de l'invention, il s'agira d'un ou plusieurs capteurs de choc ou d'accélération aptes à convertir l'énergie mécanique née d'un impact ou de l'application d'une force sur le Ballon en grandeur électrique comme une tension. Dans un tel mode de réalisation, le Ballon pourra avoir une fixité relative par rapport au sol, permettant au Ballon d'avoir un léger mouvement en cas de frappe du pied, afin de transmettre suffisamment d'énergie mécanique aux capteurs solidaires du Ballon.

D'autres modes de réalisation de l'invention mettent en oeuvre d'autres moyens pour évaluer l'intensité du coup qui a été exercé sur le Ballon, comme par exemple, sans que la liste soit exhaustive, la variation de signal d'un capteur de pression relié à une poche d'air ou de liquide placée sous la surface du Ballon, la variation de l'allongement d'un ressort rattaché au mécanisme retenant le Ballon au sol, des capteurs sensibles à la pression situés dans le secteur du socle touché par le Ballon lorsqu'une force est exercée sur lui, et dont la réponse est relative à l'intensité de la pression qui leur est appliquée.

Selon un mode de réalisation de l'invention tenant compte des déformations du Ballon qui peuvent dans un premier temps absorber une partie de l'énergie mécanique transmise au Ballon avant de la restituer par un mouvement, la quantification de l'intensité de la force exercée sur le Ballon se fera au moyen d'un échantillonnage des valeurs desdits capteurs sur un laps de temps suffisant pour qu'ils puissent saisir l'expression de cette restitution.

Le dispositif selon l'invention comprendra un moyen permettant d'évaluer même approximativement l'amplitude de la course de la jambe ayant frappé le Ballon. A chacune des catégories possibles de cette course sera associé un ensemble de signaux compatibles avec le jeu et relatifs à des frappes de balle.

Selon un mode de réalisation de l'invention, ce moyen sera réalisé sous la forme d'un certain nombre d'émetteurs de rayon lumineux et d'un nombre égal de récepteurs, chaque récepteur étant face à un émetteur, traduisant en signal électrique toute interruption de la réception de rayons lumineux émis par les émetteurs. Les axes des trajets des rayons lumineux seront placés à l'intersection d'un plan parallèle au sol et de plans perpendiculaires au sol. Les rayons seront placés à quelques centimètres au-dessus du sol et à l'arrière du joueur, de manière à ce que si le joueur recule une de ses jambes pour prendre de l'élan pour frapper sur le Ballon ou choisit une trajectoire ample pour sa jambe frappant le Ballon, cette jambe coupera un ou plusieurs rayons lumineux. Plus le nombre de rayons lumineux coupés sera important, plus la course de la jambe sera jugée importante.

Selon un autre mode de réalisation, ce moyen sera réalisé sous la forme d'un certain nombre d'émetteurs de rayon lumineux et d'un certain nombre de récepteurs de rayon lumineux. Les émetteurs seront placés à l'arrière du joueur, de manière à émettre leur rayon relativement verticalement et vers le haut et à un emplacement tel qu'au cas où la jambe du joueur soit reculée, par exemple du fait d'une prise d'élan pour frapper le Ballon, cette jambe soit au-dessus d'au moins un desdits émetteurs, ce qui réfléchira vers le bas le ou les rayons émis par lesdits émetteurs. Le ou les récepteurs seront placés de manière à pouvoir capter de tels signaux réfléchis. Dans le cas de la réception de signaux lumineux réfléchis, et en fonction du nombre de signaux réfléchis récupérés par les récepteurs, la course de la jambe sera considérée comme plus ou moins importante.

Selon un autre mode de réalisation, ce moyen sera réalisé à l'aide d'un bracelet réfléchissant les rayons lumineux, dont l'utilisateur portera un exemplaire à chaque cheville. Un certain nombre d'émetteurs de rayon lumineux et de récepteurs de rayon lumineux seront en outre placés à l'arrière et sur le côté du joueur. Emetteurs et récepteurs seront placés du même côté de manière à ce que les rayons envoyés par les émetteurs ne puissent atteindre les récepteurs sauf dans le cas où ces rayons seraient réfléchis, ce qui pourra arriver en cas de recul suffisant de la jambe du joueur et donc d'au moins un des bracelet-cheville.

D'autres modes de réalisation sont envisageables afin de permettre d'évaluer l'importance de la course d'élan ou de la course de frappe de la jambe frappant le Ballon. Il pourra s'agir, sans que cette liste soit exhaustive, d'utiliser un bracelet réfléchissant la lumière et retournant le rayon lumineux émis par une source lumineuse à un récepteur adéquat, tous deux situés face au joueur près du Ballon. Une autre solution consistera à utiliser un capteur de proximité placé près du Ballon face au joueur et dirigé vers la jambe du joueur ayant vocation à frapper le Ballon. On pourra aussi utiliser un capteur de flexion-extension, analogique ou non, placé directement sur la jambe servant au joueur à frapper et permettant d'évaluer l'importance de l'armement de la jambe ou de la course de la frappe de celle-ci. De tels capteurs peuvent avoir la forme d'interrupteurs tout ou rien fixés au niveau du genou du joueur, de capteurs de proximité placés de part et d'autre de l'articulation du genou et signalant la plus ou moins grande proximité du haut et du bas de la jambe ou de capteurs de torsion, par exemple de type piézo-électrique, placés le long de l'articulation du genou.

L'ensemble des informations sus-décrites, à savoir l'information indiquant la zone de localisation de l'application d'une force exercée sur la surface du Ballon, l'information quantifiant l'intensité du choc exercé sur le Ballon et l'information concernant l'amplitude de la course de la jambe ayant frappée le Ballon, sont rassemblées au sein d'un module qui de leur traitement tirera un état de commandes qui fera partie du signal envoyé à l'unité de traitement numérique auquel le dispositif selon l'invention est connecté, ainsi qu'un temps d'émission dudit état de commande. Par construction, cet état de commande déclenchera une ou des frappes de balle dans le programme de football.

Réduit au cadre des informations sus-décrites, l'évaluation d'une variation de commandes du dispositif selon l'invention se déroule comme suit.

La première étape de l'évaluation d'une variation de commandes du dispositif selon l'invention est déclenchée lorsqu'une force est exercée sur une des zones de localisation de la surface du Ballon. L'ensemble de signaux associé à ladite zone est alors sélectionné.

Dans une deuxième étape, le dispositif selon l'invention évalue l'importance de la course de la jambe ayant frappée le Ballon. L'ensemble de signaux associé à la course de la jambe ayant frappé le Ballon est alors sélectionné.

La troisième étape de l'évaluation de la variation de commande du dispositif selon l'invention est la mesure de l'intensité de la frappe sur le Ballon. L'ensemble de signaux associé à l'intensité de la frappe est alors sélectionné.

Selon un mode de réalisation préférentiel, l'intensité de la force exercée doit être au-dessus d'un seuil minimal pour que cette étape soit validée et que le processus se poursuive. En deçà de ce seuil, la force perçue est considérée comme accidentelle et non génératrice de signaux.

Dans un mode de réalisation préférentiel, les ensembles associés aux frappes de forte intensité contiennent tous les signaux de frappes du programme de football alors que les ensembles associés aux frappes de faible intensité ne contiennent que les signaux correspondant à des frappes de faible intensité. Cela permettra au joueur, lorsqu'il retient particulièrement l'intensité de sa frappe, de ne potentiellement envoyer que ce type de frappes.

Dans un mode de réalisation préférentiel, les signaux appartenant aux différents ensembles mentionnés déclenchent des actions dans le programme qui ont un certain réalisme relativement à l'action réelle réalisée par le joueur. Ainsi, par exemple, les signaux déclenchant des frappes fortes dans les jeux de football appartiendront aux ensembles associés à une course importante de la jambe du joueur et à une intensité suffisante de la frappe.

La quatrième étape de l'évaluation de la variation de commande du dispositif selon l'invention consiste à déterminer le signal ou les signaux qui seront envoyés à l'unité de traitement numérique à partir des ensembles de signaux précédemment sélectionnés.

Dans un mode de réalisation préférentiel, cette détermination se fait par intersections des ensembles de signaux précédemment sélectionnés. D'autres modes de détermination pourront être envisagés en fonction des types de programme de football, par exemple en utilisant des arbres de décision de logique floue.

Dans le cas où cette détermination aurait pour résultat un ensemble non vide de signaux, le ou les signaux résultant sont alors envoyés à l'unité de traitement numérique. Dans le cas préférentiel où ce résultat a été établi à la suite d'intersections des ensembles de signaux sélectionnés, cela indique une concordance entre les différentes informations fournies par les capteurs et notamment entre l'importance de la course de la jambe et l'intensité de la frappe.

Dans le cas où cette détermination aurait pour résultat un ensemble vide de signaux, cela est interprété comme une discordance entre les informations fournies par les capteurs. Un signal indiquant dans le programme de football une feinte de frappe pourra alors être envoyé. Les jeux de football sur console de jeux ou sur ordinateurs personnels prennent en compte, en effet, les feintes de frappe, généralement caractérisées par une disharmonie entre l'importance de la course de la jambe de frappe et la faible intensité de la frappe.

Selon un mode de réalisation préférentiel du dispositif où les ensembles de signaux associés aux intensités fortes de frappe contiennent tous les signaux de frappe du jeu et où les ensembles de signaux associés aux intensités faibles ne contiennent qu'un plus petit nombre de signaux, on pourra plus probablement aboutir à un ensemble vide de signaux lorsque la course de la jambe du joueur est importante et la frappe faible, ce qui est cohérent avec l'idée d'une feinte de frappe.

La cinquième étape de l'évaluation de la variation de commande du dispositif selon l'invention consiste à établir le temps pendant lequel le signal précédemment déterminé sera émis par le dispositif.

Dans un mode de réalisation préférentiel pour les programmes de football où l'intensité de la frappe dans le programme est directement fonction du temps où l'on a retenu pressée la touche déclenchant la frappe, on convertira en temps d'émission du signal précédemment déterminé l'intensité de la frappe sur le Ballon telle qu'évaluée dans la troisième étape. On pourra envisager dans ce cadre, suivant les spécificités des programmes, de définir des coefficients de conversion, propres à chaque signal de frappe, entre l'intensité réelle de la frappe et le temps d'émission dudit signal de frappe.

Selon un mode de réalisation, on déterminera à l'aide des capteurs du dispositif selon l'invention, le temps pendant lequel s'exerce une force sur le Ballon. Suivant ce mode de réalisation, on évaluera un « temps de pression du pied sur le Ballon », comme la période, supérieure à une durée minimum, pendant laquelle les capteurs de localisation d'une force exercée sur le Ballon ont été activés sans interruption. Suivant ce mode de réalisation, on pourra également distinguer les pressions en fonction de la localisation desdites pressions.

Selon un mode de réalisation, tant que le pied de l'utilisateur ayant déclenché le processus en quatre étapes que nous venons de décrire pressera de manière significative sur le Ballon, le signal généré à la fin des quatre étapes précédentes sera continûment envoyé à l'unité de traitement numérique.

Selon un mode de réalisation, le temps d'émission d'un signal généré à la fin des cinq étapes précédentes, sera égal à la plus haute des deux valeurs temporelles établies pour l'une en fonction de l'intensité de la frappe sur le Ballon et pour l'autre en fonction du temps de pression du pied du joueur sur le Ballon.

Selon un mode de réalisation préférentiel, on distinguera les signaux associés à une pression du pied sur le Ballon des signaux associés à une frappe sur le Ballon. Les signaux associés à la pression du pied pourront par exemple être associés à des actions particulières des jeux de football comme les pressions défensives ou les dribbles.

Le dispositif selon l'invention comprendra des moyens de commande envoyant des signaux complémentaires à ceux décrits précédemment.

Avantageusement, le dispositif selon l'invention pourra comprendre au moins un bouton de commande situé sur le Ballon ou à proximité et apte à agir sur le système d'imagerie et de sons.

Selon un mode de réalisation de l'invention, le dispositif selon l'invention est complété par une Poignée comportant des boutons de commandes déclenchant des signaux complémentaires au dispositif sus-décrit.

Avantageusement, les boutons de cette Poignée comprendront au moins un bouton directionnel permettant au joueur de contrôler les déplacements du footballeur virtuel.

Avantageusement, les boutons de cette Poignée comprendront au moins un bouton directionnel permettant au joueur de contrôler les directions des trajectoires des frappes de balle.

Selon un mode de réalisation de l'invention complétée avec une Poignée, la Poignée comprendra un bouton qui modifiera lors de son activation les signaux associés à la pression du pied sur le Ballon, par exemple en faisant passer ces signaux de « pression défensive » à « dribbles ».

Selon un mode de réalisation de l'invention complétée avec une Poignée, la liaison entre cette Poignée et le reste du dispositif selon l'invention est une liaison sans fil.

Selon un mode d'exécution de l'invention, le dispositif selon l'invention est pourvu d'un connecteur permettant de connecter au corps du dispositif selon l'invention une manette de jeu classique dont les signaux pourront être transmis, via le dispositif selon l'invention, à la console de jeux ou à l'ordinateur personnel. Dans un tel mode de réalisation, il pourra être avantageux dans un cadre ludique de proposer au joueur soit la prise en compte de tous les signaux issus de la manette, soit la prise en compte uniquement des signaux que le dispositif selon l'invention ne génère pas.

Selon un mode de réalisation de l'invention, le Ballon reposera sur un tapis se poursuivant sous les pieds de l'utilisateur.

Selon un mode de réalisation avec tapis, le tapis sera composé de surfaces disposées de manière symétrique de part et d'autre d'un plan vertical passant par le centre du Ballon.

Selon un mode de réalisation de l'invention, ce tapis comprendra un certain nombre de surfaces sensibles à la pression, déclenchant des signaux interprétables par le programme de football. Ces surfaces pourront être placées de manière à être facilement accessibles par le pied d'appui du joueur.

Selon un mode de réalisation de l'invention avec surfaces sensibles à la pression disposées sur le tapis, ces surfaces pourront être doublées symétriquement à gauche et à droite du joueur, de manière à ce qu'un joueur gaucher ou un joueur droitier puisse bénéficier d'un accès similaire à ces surfaces.

L'état des commandes du dispositif selon l'invention tel que défini à la fin des cinq étapes sus-décrites précédemment, est complété par l'état des commandes des surfaces sensibles à la pression situées sur le tapis et l'état des commandes de la Poignée du dispositif selon l'invention ou de la manette de jeu classique que l'on peut connecter au dispositif, avant d'être envoyé à la console de jeux ou à l'ordinateur personnel.

Le dispositif selon l'invention est connectable à une unité de traitement numérique qui pourra être extérieure ou incorporée au dispositif.

Suivant un mode de réalisation, cette connexion est effectuée à l'aide d'un câble muni du connecteur adéquat.

Suivant un autre mode de réalisation, cette connexion est effectuée à l'aide d'une liaison sans fil. Dans ce cas, un récepteur sera connectable ou incorporé à l'unité de traitement numérique et un émetteur au niveau du dispositif transmettra au récepteur l'ensemble des signaux générés. Suivant un mode de réalisation avec émetteur et récepteur, les signaux allant de l'unité de traitement numérique vers les périphériques seront transmis via une liaison sans fil au dispositif et, selon les cas, restitués sous forme de vibration dans la Poignée du dispositif ou la manette de jeu classique connectée au dispositif.

Selon un mode de réalisation de l'invention, les informations évaluées par les différents capteurs susmentionnés seront transmises à l'utilisateur, par exemple via des signaux sonores et/ou visuels.

Selon un mode de réalisation de l'invention, les signaux envoyés par le dispositif selon l'invention seront affichés au joueur au moyen d'un dispositif d'affichage placé sur le dispositif. Le joueur pourra ainsi mieux saisir le fonctionnement du dispositif et ajuster son comportement en conséquence.

Le dispositif selon l'invention présente une innovation dans le domaine du sport et du jeu interactif dans la mesure où il n'existe pas d'accessoire de sport ou de périphérique de jeu permettant de réaliser avec un réalisme incluant des frappes réelles dans une balle, des signaux suffisamment complexes nécessaires aux séances de football interactif avec les jeux les plus populaires fonctionnant sur consoles de jeux ou sur ordinateurs personnels.

Le dispositif selon l'invention est conçu spécifiquement de manière à pouvoir capter et interagir avec les mouvements propres à la pratique de football, incluant la frappe dans une balle rappelant un ballon de football, tout en fournissant tous les signaux nécessaires au bon fonctionnement de programmes de football populaires sur les consoles de jeux vidéo et les ordinateurs personnels.

Le dispositif selon l'invention permet, par la motivation supérieure que donne l'interaction et la proximité de la frappe de balle qu'il offre avec l'expérience réelle d'un jeu de football, de passer plus facilement la période d'apprentissage du programme de football, tout en étant immédiatement gratifié par le plaisir de la démarche interactive et des défis ludiques.

D'autre part, le dispositif selon l'invention se présente aussi comme une invention complémentaire à d'autres produits interactifs (capture d'image, capture de mouvements du corps etc.). Il peut donc s'intégrer dans des jeux, expériences ou loisirs de réalité virtuelle sans précédent.

Le dispositif selon l'invention peut à la fois être utilisé par des utilisateurs jouant seuls ou selon un mode multijoueur aux jeux vidéo de football, mais aussi être un périphérique mis à disposition des participants aux cours des centres sportifs ou dans des salles d'arcade.

On comprendra mieux l'invention à l'aide de la description, faite ci-après à titre purement explicatif, d'un mode de réalisation de l'invention, en référence aux figures annexées :
- la figure 1 illustre une vue en perspective du Ballon et l'emplacement des zones de localisation de celui-ci ;
- la figure 2 illustre en vue du dessus le processus d'assignation d'une force à une zone de localisation ;
- la figure 3 illustre une vue en perspective du dispositif selon l'invention et d'un joueur s'apprêtant à frapper le Ballon ;
- la figure 4 illustre une vue du dessus du Ballon, du tapis et d'une Poignée complétant les signaux du dispositif selon l'invention ;
- la figure 5 illustre une vue en coupe du Ballon et du socle qui le maintient au sol;
- la figure 6 illustre la série d'événements et le traitement d'informations à l'origine de l'émission par le dispositif d'un signal ou d'une combinaison de signaux vers l'unité de traitement numérique ;
- la figure 7 illustre une manière d'évaluer le signal à partir des informations d'une partie du dispositif ;
- la figure 8 illustre le traitement global des signaux issus du dispositif selon l'invention.

Le mode de réalisation préférentiel décrit par la suite concerne principalement les programmes de football les plus populaires tels que quatre signaux spécifiques déclenchent quatre principales catégories de frappes. Cependant, le principe indiqué pourra s'étendre à un nombre différent de signaux principaux.

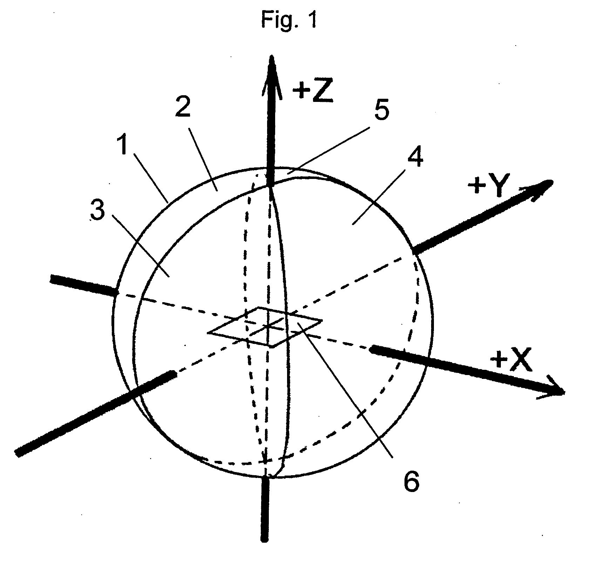

Suivant un mode de réalisation représentée en Figure 1, la surface d'un Ballon 1 est divisé en quatre zones 2, 3, 4 et 5 de localisation de l'application d'une force exercée sur la surface dudit Ballon. Ces zones ont des formes de « quartiers » verticaux, le terme de « quartier » indiquant juste une forme générale et n'impliquant pas que ces zones divisent la surface du Ballon en quatre parties égales.

Un mode de réalisation de ces zones consiste à utiliser deux capteurs de choc ou d'accélération tels que décrits précédemment, disposés approximativement au centre du Ballon et tels que les axes de sensibilité de ces capteurs soient perpendiculaires l'un à l'autre et sur un plan horizontal 6. L'axe d'un de ces capteurs est indiqué sur le dessin par +Y et l'autre par +X. L'axe +Y est dirigé du joueur vers le Ballon. L'axe +X est dirigé de gauche à droite du joueur. L'axe +Z représente l'axe vertical allant de bas en haut.

On privilégiera un mode de réalisation permettant de réaliser des zones de localisation différenciant les types de frappe de balle de football les plus courantes, à savoir les frappes sur les parties latérales du Ballon qui seront naturellement effectuées de l'intérieur du pied (arrête interne du pied) et qui correspondent à des frappes précises mais ayant relativement peu de puissance. Et les frappes sur la partie centrale du Ballon, qui seront naturellement effectuées au niveau de l'hallux (1^{er} métatarse) ou du coude-pied et qui correspondent à des frappes puissantes mais relativement moins précises. Le mode de réalisation, dans l'attribution qu'il fera des frappes de pied réalisées dans le jeu, fera en sorte qu'il y aura une cohérence entre les types de frappe réalisés sur le Ballon tels qu'indiqués et les types de frappes réalisés par le footballeur virtuel.

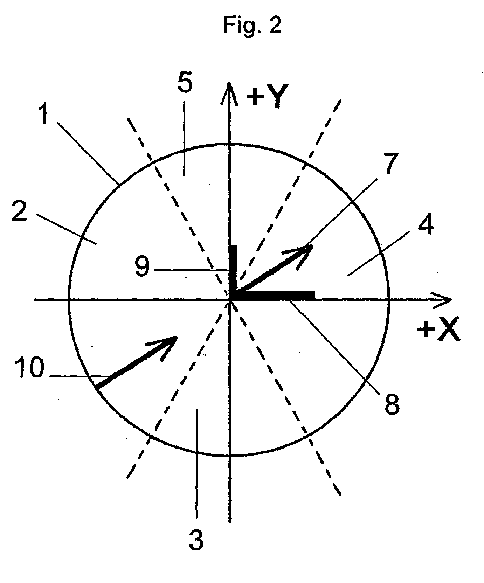

La Figure 2 montre en vue de dessus le Ballon 1 ainsi que les zones de localisation 2, 3, 4 et 5 délimitée sur la Figure par des pointillées. La Figure 2 illustre la création du vecteur 7, représentant une force exercée sur le Ballon 1, dans le repère orthonormé du plan horizontal formé par les deux axes +X et +Y des deux capteurs. Ce vecteur 7 est construit à partir des composantes de ladite force telles que définies sur l'axe +X par l'abscisse 8 représentant la valeur du capteur ayant l'axe de sensibilité +X, et sur l'axe +Y par l'ordonnée 9 représentant la valeur du capteur ayant l'axe de sensibilité +Y. Ce vecteur 7 est rapporté par translation au vecteur 10, situé sur la circonférence 1 du Ballon, qui peut être considéré comme l'image de la force exercée sur le Ballon. Il permet d'estimer dans quelle zone de la surface du Ballon la force a été exercée. Ainsi, dans le cas de la Figure 2, la force a été exercée en zone 2.

Dans un mode de réalisation, les zones de localisation seront matérialisées sur la surface du Ballon par des zones colorées.

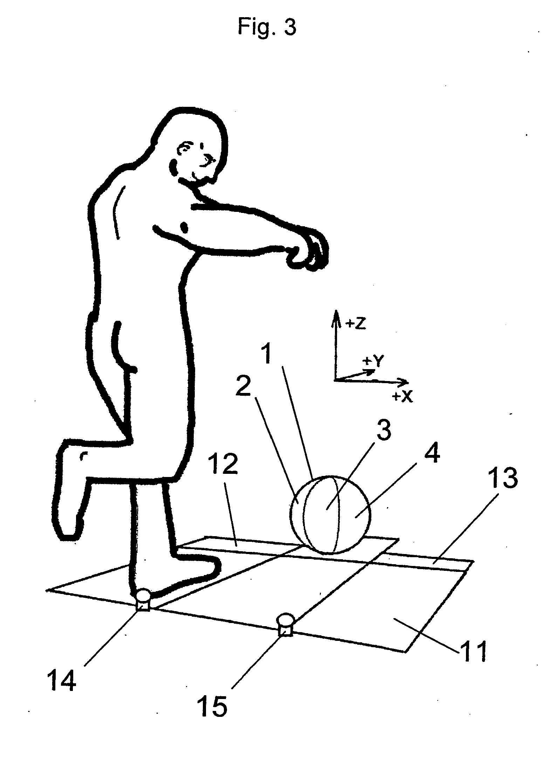

Suivant un mode de réalisation représentée en Figure 3, un Ballon 1 est placé devant le joueur. La forme, les dimensions et les qualités physiques (notamment l'élasticité et la résistance) du Ballon du dispositif selon l'invention seront choisies de manière à donner au joueur le frappant du pied l'impression de frapper dans un ballon de football afin de permettre aux utilisateurs du dispositif selon l'invention d'avoir des sensations physiques de frappe du Ballon analogues à celles que l'on peut avoir lorsque l'on frappe un ballon de football.

Comme illustré en Figure 3, le Ballon 1 est rendu solidaire à un tapis 11 sur lequel le joueur prend appui. Ce tapis comprend des surfaces sensibles à la pression situées en 12 et 13 sur lesquelles le joueur peut poser son pied d'appui ou bien son autre pied lorsqu'il ne frappe pas le Ballon, générant ainsi des signaux du jeu.

Derrière le joueur, un dispositif composé d'un émetteur de rayon lumineux 14 ainsi que d'un récepteur 15 dudit rayon lumineux détecte l'interruption du rayon lumineux par le passage du pied du joueur, que ce soit lorsque le joueur recule son pied au-delà du rayon lumineux pour prendre de l'élan pour frapper fortement le Ballon ou lorsqu'il avance son pied pour frapper le Ballon après l'avoir reculé au-delà du rayon lumineux. Comme on le voit sur la Figure 1, l'émetteur 14 ainsi que le récepteur 15 sont munis de pieds de manière à être suffisamment au-dessus du sol afin que leur rayon soit dans le trajet de la jambe du joueur.

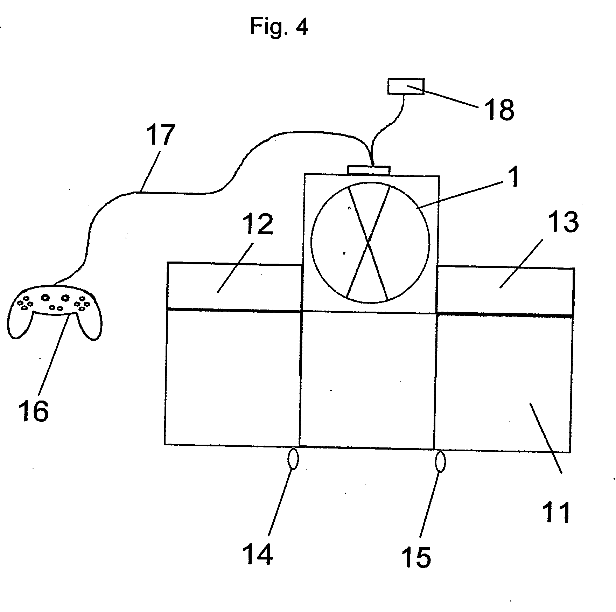

Comme illustré à la Figure 4, un mode de réalisation préférentiel du dispositif selon l'invention comporte un tapis 11 symétrique suivant un plan vertical passant par le centre du ballon 1. L'un des intérêts d'un tel tapis est que le poids du pied d'appui du joueur sur le tapis contribue à maintenir le Ballon au sol lorsqu'il est frappé par l'autre jambe du joueur, étant donné que le Ballon est rattaché au tapis.

Avantageusement, le tapis 11 sera constitué d'une matière suffisamment rigide pour assurer la fixité de positionnement du Ballon 1 et de l'ensemble relativement au joueur, lorsque ce dernier frappe le Ballon.

Comme illustré à la Figure 4, le tapis 11 peut comprendre des zones dotées d'une ou de plusieurs surfaces sensibles à la pression situées en 12 et 13, dont les signaux permettent au joueur de compléter les signaux de frappe. Ainsi, par exemple, en combinant une frappe et l'appui sur une des surfaces sensibles à la pression, le joueur indiquera que son tir est un lob et non pas un tir tendu.

Le tapis 11 illustré à la Figure 4 est conçu de manière à ce que le joueur puisse utiliser son pied d'appui ou son pied de frappe pour presser les surfaces sensibles à la pression situées en 12 et 13. Dans la réalisation préférentielle illustrée Figure 4, la disposition de ces surfaces permet à un joueur de les presser alors qu'il prend appui pour frapper ou en attendant de frapper. Elle permet aussi d'utiliser l'un ou les deux pieds pour presser simultanément sur plusieurs surfaces sensibles à pression disposées sur le tapis et ainsi combiner les signaux.

Sur la Figure 4, à l'arrière du tapis 11, on voit un émetteur de rayon lumineux 14 et le récepteur correspondant 15. Cet émetteur et ce récepteur sont placés de manière à ce que le joueur dont la jambe a une course d'élan ou de frappe importante rencontre et coupe ce rayon lumineux. Une course d'élan ou de frappe importante d'une jambe dévoile la volonté du joueur de donner un coup d'une intensité supérieure à un coup porté avec une petite course et sera utilisée comme indicateur d'une catégorie de frappes fortes.

Selon un mode de réalisation préférentiel du dispositif selon l'invention, on distinguera deux types de courses d'élan ou de frappes de la jambe, une course courte qui sera caractérisée dans la Figure 4 en ce qu'elle ne coupe pas le rayon lumineux reliant l'émetteur lumineux 14 et le récepteur lumineux 15, et une course longue qui sera caractérisée en ce qu'elle coupe le rayon lumineux reliant l'émetteur lumineux 14 et le récepteur lumineux 15. A chacune de ces courses seront associés des ensembles distincts de frappes dans le jeu de football. Remarquons que le joueur pourra ajuster la course de sa jambe selon sa condition physique et l'urgence du coup qu'il doit porter, soit en reculant d'importance la jambe soit en la reculant a minima pour qu'elle coupe le rayon lumineux.

Comme l'illustre la Figure 4, à l'avant du dispositif selon l'invention, une Poignée 16 est connectée au dispositif via un câble 17. Cette Poignée 16 est munie de différents boutons dont les signaux sont compatibles avec les programmes de football et sont complémentaires ou identiques à ceux fournis par le reste du dispositif.

Dans un mode de réalisation préférentiel, cette Poignée 16 comprend au moins les boutons permettant de diriger les trajectoires des tirs ainsi que les courses des footballeurs virtuels. En effet, il s'agit de deux éléments fondamentaux exigeant une très grande précision dans les jeux de football sur consoles de jeux ou sur ordinateurs personnels, et commandant directement le niveau de performance d'un joueur dans le jeu. Afin de tenir compte du fait que les joueurs des programmes de jeux de football ont développé une très grande dextérité avec les doigts pour contrôler ces deux éléments, la Poignée du dispositif selon l'invention les proposera avantageusement sous forme de boutons semblables à ceux d'une manette de jeu classique.

Le dispositif selon l'invention est connectable à une unité de traitement numérique.

Suivant un mode de réalisation illustrée à la Figure 4, cette connexion est effectuée à l'aide d'un câble 18 muni du connecteur adéquat.

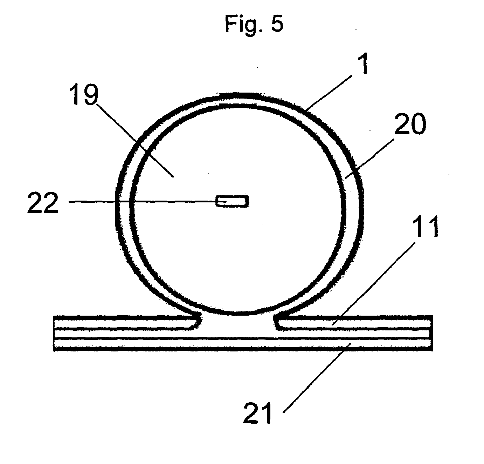

Suivant un mode de réalisation illustré à la Figure 5, le Ballon 1 est constitué d'un ballon en matière dense et élastique 19 contenu dans une surface relativement élastique continue ou de type filet 20. Cette surface 20 couvrant le Ballon se poursuit et est solidarisée à un socle 21 assurant la stabilité du Ballon au sol et le tapis 11. La liaison entre le Ballon et le socle est rendue relativement élastique par l'entremise de la surface 20.

Selon le mode de réalisation du dispositif selon l'invention illustré à la Figure 5, à l'intérieur du Ballon se trouve un module 22 contenant un ou plusieurs capteurs de choc ou d'accélération capables de transformer l'énergie mécanique résultant d'un coup de pied dans le Ballon 1 en une variation d'une grandeur électrique, comme par exemple une tension, permettant ainsi de quantifier l'intensité de la frappe.

Les signaux créés en frappant certaines zones du Ballon sont transformés de manière à être interprétables par le type d'unités de traitement numérique auquel le dispositif selon l'invention est connecté et auquel le dispositif selon l'invention transmet les signaux. Plusieurs modes de réalisation explicités par la suite viseront en particulier à décrire comment générer des signaux de jeux compatibles avec les jeux de football populaires sur console de jeux ou sur ordinateurs personnels et identiques à ceux générés avec une manette de jeu classique.

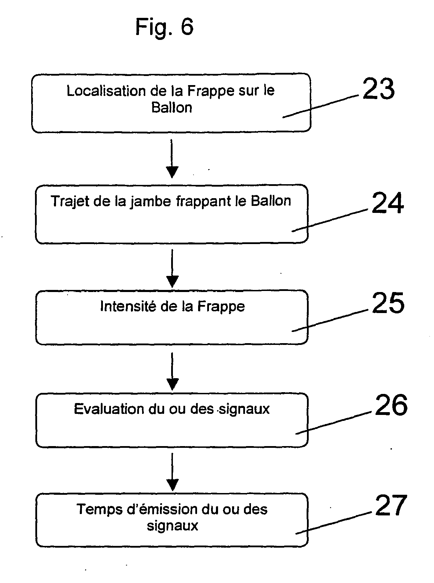

La Figure 6 illustre, dans le cadre du mode de réalisation décrit, comment se déclenche un signal ainsi que le type de signal envoyé à l'unité de traitement numérique par le dispositif composé du Ballon 1, des zones de localisation 2, 3, 4 et 5 sur sa surface, du ou des capteurs de choc ou de vibration 22 qu'il possède en son sein et du capteur d'importance de trajectoire de la jambe illustré par l'émetteur de rayon lumineux 14 et son récepteur associé 15, en fonction des actions du joueur. Réduit à ce cadre, l'évaluation d'une variation de commande du dispositif selon l'invention se déroule comme suit.

Comme illustrée sur la Figure 6, la première étape 23 de l'évaluation d'une variation de commande du dispositif selon l'invention est réalisée au cas où une frappe est localisée sur le Ballon. A chacune des zones de localisation est associé un ensemble de signaux interprétables par le programme de football. Un ensemble de signaux interprétables par le programme associé à la zone de localisation est alors sélectionné.

Dans le mode de réalisation illustré en Figure 1, 2 et 3 avec des zones de localisation partitionnant le Ballon 1, si la frappe est appliquée sur la zone 3 située au centre du Ballon devant le joueur, on sélectionnera alors un ensemble de signaux A. Si ce sont les autres zones de localisation où s'applique la frappe, ce sera alors un ensemble B de signaux qui sera sélectionné.

L'intérêt de ce découpage est que la distinction de frappe de pied qu'il opère est pertinente et réaliste relativement au corpus de frappes de pied au football comme il a été vu précédemment.

Dans un mode de réalisation préférentiel, les ensembles A et B contiennent chacun deux signaux distincts, faisant un total de quatre signaux différents, chacun de ces signaux déclenchant dans le programme de football une des quatre principales catégories de frappes que l'on trouve généralement dans les programmes de football.

Comme illustrée sur la Figure 6, dans une deuxième étape 24, le dispositif selon l'invention évalue ensuite l'importance de la course de la jambe ayant frappée le Ballon 1. A chacune des catégories possibles de cette course est associé un ensemble de signaux possibles. L'ensemble de signaux associé à la catégorie de la course de la jambe est sélectionné.

Selon un mode de réalisation préférentiel du dispositif selon l'invention, le dispositif selon l'invention jugera que la course de la jambe est longue si le signal lumineux reliant l'émetteur 14 et le récepteur 15 a été coupé peu de temps avant que la surface sensible à la pression située sur le ballon ait été pressée. Réciproquement, la course sera jugée courte si ce signal lumineux n'a pas été coupé depuis un certain laps de temps.

Selon le mode de réalisation préférentiel du dispositif selon l'invention où la course de la jambe est soit courte, soit longue, un ensemble de signaux C est associé à une course courte et un ensemble de signaux D est associé à une course longue. Les ensembles C et D contiennent chacun deux signaux distincts, faisant un total de quatre signaux différents. L'union des ensembles C et D est donc, dans ce mode de réalisation, identique à l'union des ensembles A et B.

Comme illustrée sur la Figure 6, la troisième étape 25 de l'évaluation de la variation de commandes du dispositif selon l'invention évalue l'intensité du choc ou des vibrations résultant de la frappe du Ballon. A chacune des catégories possibles d'intensité est associé un ensemble de signaux. L'ensemble de signaux associé à l'intensité de la frappe est alors sélectionné.

Dans le mode de réalisation préférentiel discuté, on distinguera les intensités de frappe en dessous d'un seuil auxquelles correspondra un ensemble réduit de signaux déclenchant dans le programme de football des frappes relativement courtes et les intensités de frappe au-dessus dudit seuil auxquelles correspondront les signaux des quatre frappes principales indiquées précédemment.

Comme illustré sur la Figure 6, lors de la quatrième étape 26 de l'évaluation de la variation de commandes du dispositif selon l'invention, le dispositif déterminera le signal ou les signaux à envoyer en fonction des ensembles de signaux précédemment sélectionnés.

Dans le mode de réalisation préférentiel discuté, le processus procédera aux intersections des ensembles de signaux précédemment sélectionnés.

De plus, les ensembles de signaux A, B, C et D seront constitués de manière à ce que leurs intersections suivant le processus décrit ne puissent contenir qu'un et qu'un seul élément.

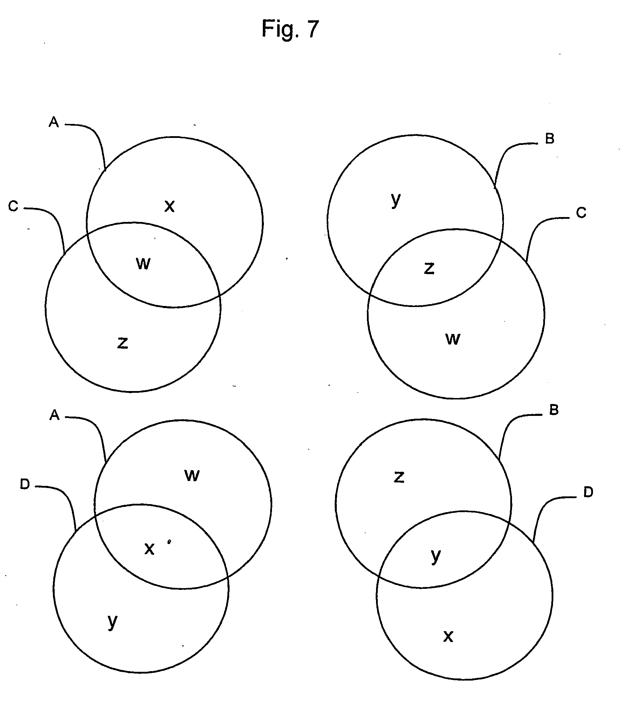

La Figure 7 illustre un moyen préférentiel pour réaliser cela. Si w, x, y et z désignent les signaux des quatre frappes principales dans le programme de football, A contiendra les signaux w et x, B les signaux y et z, C les signaux w et z et D les signaux x et y. Dès lors, l'intersection de l'ensemble de signaux C avec l'ensemble de signaux A (ou B) retenu lors de la première étape d'évaluation, de même que l'intersection de l'ensemble de signaux D avec l'ensemble de signaux A (ou B) retenu lors de la première étape d'évaluation, ne pourra contenir qu'un et qu'un seul signal, tiré parmi les signaux des quatre frappes principales. L'intersection de cet unique signal avec l'ensemble associé à l'intensité de la frappe permettra d'évaluer la cohérence de l'intensité de la frappe avec l'importance de la course de la jambe et d'établir ainsi s'il y a eu ou non feinte de frappe.

Dans le cas où l'intersection des trois ensembles de signaux serait non vide, elle ne pourra, d'après ce qui précède, contenir qu'un et un seul signal, caractéristique de la frappe réalisée par le joueur.

Dans le cas où l'intersection serait vide, le signal envoyé sera celui d'une feinte de frappe. Ce cas ne pourra se produire, du fait des types d'ensembles de signaux sus-décrits, qu'au cas où la frappe est de faible intensité et que les signaux associés à une faible intensité de frappe et ceux associés à la course de la jambe ne correspondent pas, ce qui sera préférentiellement le cas lorsque la course de la jambe sera considérée comme importante. Notons que les feintes de frappes font partie des signaux des programmes de football et que dans la réalité du football, les feintes de frappe sont généralement caractérisées par une discordance entre l'importance de la course de la jambe de frappe et la faible intensité de la frappe. L'adoption du mode de réalisation préférentiel permettra donc au joueur de générer de manière réaliste les feintes de frappe.

Comme illustré sur la Figure 6, lors de la cinquième étape 27, dans le mode de réalisation préférentiel discuté, pour les programmes de football où l'intensité de la frappe est directement fonction du temps où l'on a retenu pressée la touche déclenchant la frappe, on traduira en temps d'émission du signal caractéristique de la frappe l'intensité de la frappe sur le Ballon telle qu'évaluée dans la troisième étape.

Selon un mode de réalisation, l'état des commandes du dispositif selon l'invention tel que défini à la fin des cinq étapes sus-décrite, est complété par les pressions sur les surfaces sensibles à la pression en 12 et 13 du tapis 11.

Selon un mode de réalisation, l'état des commandes du dispositif selon l'invention tel que défini à la fin des quatre étapes sus-décrite, est complété par l'état des boutons de commandes de la Poignée 16 du dispositif selon l'invention ou de la manette que l'on peut connecter au dispositif.

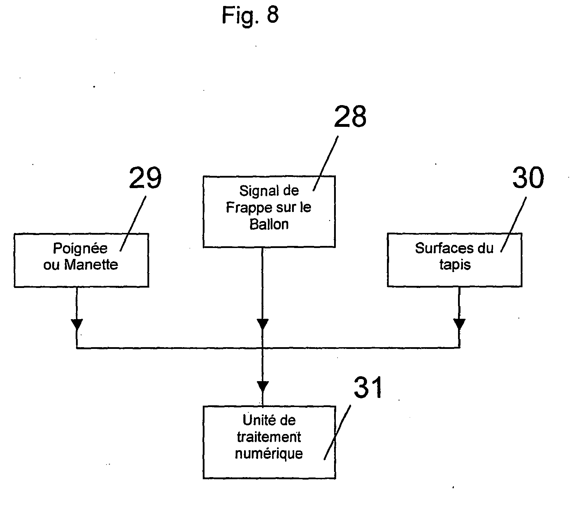

La Figure 8 illustre un mode de réalisation préférentiel où les signaux 28 issus du processus en cinq étapes détaillé précédemment sont combinés aux signaux 29 générés par la Poignée ou la manette classique connectée au dispositif et aux signaux 30 générés par les pressions sur les surfaces sensibles du tapis 11, avant d'être envoyés à l'unité de traitement numérique 31 à laquelle le dispositif selon l'invention est connecté. Un mode préférentiel de combinaison des signaux sera celui du « OU » inclusif de la logique binaire, à savoir qu'un signal est envoyé à l'unité de traitement numérique 31 s'il est au moins une fois généré par les éléments 28, 29 ou 30. Il n'est pas envoyé sinon.

Suivant un mode de réalisation, le dispositif comportera des boutons de commande situés sur le tapis, sur le Ballon ou sur la Poignée. Les signaux générés par ces boutons seront eux aussi transmis à l'unité de traitement numérique. Ces boutons pourront être placés sur un ou des supports spécifiques et être complétés de diodes ou de différents autres éléments visant à augmenter le plaisir et la richesse d'utilisation.

Suivant un mode de réalisation, les signaux émis par le dispositif selon l'invention seront accompagnés d'un signal spécifique permettant d'identifier que le dispositif générant les signaux est de la catégorie du dispositif selon l'invention. Un tel signal identifiant permettra par exemple de s'assurer, en cas de concours ou de jeux en réseau faisant intervenir plusieurs participants éloignés, que l'ensemble des concurrents sont tous munis d'un périphérique de la même catégorie que celle du dispositif selon l'invention.

Suivant un mode de réalisation avec capteur de vibration ou de choc, les informations issues de ce capteur seront directement transmises à l'utilisateur au moyen de signaux lumineux ou sonores variables selon l'intensité du choc et émis directement par le dispositif selon l'invention.

Selon un mode de réalisation, on pourra déplacer le ou les capteurs utilisés pour évaluer l'amplitude de la course de la jambe avant la frappe, de manière à pouvoir l'adapter à la taille ou au souhait d'amplitude du joueur.

Selon un mode de réalisation, le dispositif selon l'invention sera muni d'un boîtier permettant à l'utilisateur d'ajuster certains paramètres du dispositif, comme l'emplacement des zones de localisation des forces exercées sur le Ballon ou l'importance du temps d'émission des signaux à une intensité de frappe donnée.

Selon un mode de réalisation, l'ensemble des signaux différents transmis par le dispositif selon l'invention à l'unité de traitement numérique est inférieur ou égal au nombre de signaux différents transmis par une manette de jeu classique à une console de jeux et interprétables par cette dernière. L'intérêt de ce mode de réalisation tient en ce que le dispositif selon l'invention pourra être plus facilement connecté à une console de jeux.

Selon une possibilité offerte par l'invention, les différentes zones du tapis seront articulées entre elles de manière à pouvoir être repliées pour former une boite de rangement ayant lesdites zones comme surfaces, au centre le Ballon et contenant l'ensemble du dispositif.

L'invention est décrite dans ce qui précède à titre d'exemple. Il est entendu que l'homme du métier est à même de réaliser différentes variantes de l'invention sans pour autant sortir du cadre du brevet comme défini dans les revendications.

## Revendications

1. Dispositif pour la pratique du football interactif en association avec un système d'imagerie et de sons constituant un programme de football fonctionnant sur une unité de traitement numérique,
**caractérisé en ce qu'**il comprend un Ballon (1) relativement fixé au sol, ayant une forme et une consistance rappelant celles d'un ballon de football, des capteurs indiquant l'existence et la localisation sur la surface du Ballon d'une frappe exercée sur ledit Ballon, quantifiant l'intensité de ladite frappe sur ledit Ballon et l'importance de la course de la jambe de l'utilisateur ayant frappé ledit Ballon et un module transformant les informations fournies par ces capteurs en signaux de commande à destination de l'unité de traitement numérique à laquelle le dispositif selon l'invention est connecté.

2. Dispositif selon la revendication 1, **caractérisé en ce que** le Ballon est relié à un socle reposant au sol par un élément faisant une liaison élastique et semi-rigide entre le Ballon et le socle.

3. Dispositif selon la revendication 1 ou 2, **caractérisé en ce que** le module est agencé pour calculer un ou des signaux de commande en fonction des informations fournies par les capteurs du dispositif lorsqu'une frappe est appliquée sur le Ballon et de la cohérence de ces informations entre elles, puis de transmettre le ou lesdits signaux à l'unité de traitement numérique.

4. Dispositif selon l'une quelconque des revendications précédentes, **caractérisé en ce que** les spectres d'informations des capteurs sont divisées en catégories auxquelles sont associés des ensembles de signaux du programme de football et que pour déterminer le signal ou les signaux à envoyer, le module du dispositif selon l'invention, procède par intersections des ensembles associés aux catégories auxquelles appartiennent les informations fournies par les capteurs.

5. Dispositif selon l'une quelconque des revendications précédentes, **caractérisé en ce que** le moyen indiquant qu'une force est exercée sur le Ballon ainsi que la zone de localisation de ladite force sur la surface du Ballon est constitué par au plus trois capteurs de choc ou d'accélération disposés au centre du Ballon de manière à ce que les informations qu'ils fournissent permettent de reconstituer vectoriellement la force exercée sur la surface du Ballon.

6. Dispositif selon la revendication précédente, **caractérisé en ce que** la surface du Ballon (1) est dotée de quatre zones (2), (3), (4) et (5) de localisation de l'application de la force exercée sur le Ballon et que ces zones sont indépendantes et partitionnent la surface du Ballon (1).

7. Dispositif selon l'une quelconque des revendications précédentes, **caractérisé en ce que** la zone de localisation de la force exercée sur le Ballon est captée par des capteurs mesurant l'inclinaison du Ballon relativement à son axe vertical.

8. Dispositif selon l'une quelconque des revendications précédentes, **caractérisé en ce que** le moyen indiquant le trajet de la jambe ayant frappé le Ballon est réalisé par un ou plusieurs émetteurs de rayons lumineux situés derrière le joueur et un ou plusieurs récepteurs de rayons lumineux situés en face desdits émetteurs, signalant une interruption de leur rayons lumineux, occasionnée notamment par le passage de la jambe du joueur selon l'amplitude de son mouvement.

9. Dispositif selon l'une quelconque des revendications précédentes, **caractérisé en ce que** le moyen quantifiant l'intensité de la frappe du pied du joueur sur le Ballon est un ou plusieurs capteurs de choc ou de vibration (22) placés dans le Ballon.

10. Dispositif selon l'une quelconque des revendications 1 à 8, **caractérisé en ce que** le moyen quantifiant l'intensité de la frappe du pied du joueur sur le Ballon et identifiant la zone de localisation de ladite force sur la surface du Ballon est constitué d'un ou plusieurs capteurs dont la réponse est relative à la pression qui leur est appliquée, placés autour de l'axe vertical du Ballon, sur une surface pressée par le Ballon lorsque celui-ci est incliné du fait d'une force exercée sur lui.

11. Dispositif selon l'une quelconque des revendications précédentes, **caractérisé en ce que** le module est agencé pour transmettre le signal déclenché par une frappe sur le Ballon pendant un temps d'autant plus important que l'intensité de la frappe exercée sur le Ballon est importante.

12. Dispositif selon l'une quelconque des revendications précédentes, **caractérisé en ce que** le module est agencé pour évaluer un « temps de pression d'une force sur le Ballon », évalué comme une période supérieure à une durée minimum pendant laquelle les capteurs de localisation d'une force exercée sur le Ballon ont été activés sans interruption.

13. Dispositif selon l'une quelconque des revendications précédentes, **caractérisé en ce que** le module est agencé pour prendre en compte, lors de l'élaboration des signaux de commande à partir des informations des capteurs, la cohérence entre l'importance du trajet de la jambe ayant frappée le Ballon et l'intensité de la frappe sur le Ballon, et qu'en cas de discordance, le module est agencé pour transmettre un signal correspondant à une feinte dans le programme de football.

14. Dispositif selon l'une quelconque des revendications précédentes, **caractérisé en ce que** le module est agencé pour transmettre un signal à l'unité de traitement numérique connectée au dispositif tant que s'exerce sur le Ballon la force ayant déclenchée l'émission dudit signal.

15. Dispositif selon les revendications 12, 13 ou 14, **caractérisé en ce que** le module est agencé pour transmettre à l'unité de traitement numérique un signal spécifique tant s'exerce une pression sur le Ballon, signal pouvant être différent du signal de la frappe initiatrice de ladite pression.

16. Dispositif selon l'une quelconque des revendications précédentes, **caractérisé en ce que** le Ballon est assujetti à un tapis (11) muni de surfaces sensibles à la pression que le joueur peut presser avec ses pieds afin d'envoyer des signaux additionnels au programme de football.

17. Dispositif selon l'une quelconque des revendications précédentes, **caractérisé en ce que** le dispositif est complété par une Poignée (16) munie de différents boutons envoyant des signaux à l'unité de traitement numérique connectée au dispositif.

18. Dispositif selon la revendication précédente, **caractérisé en ce que** l'actionnement d'un ou plusieurs boutons de la Poignée (16) modifie le signal envoyé à l'unité de traitement numérique du fait d'une action sur le Ballon.

19. Dispositif selon l'une quelconque des revendications précédentes, **caractérisé en ce que** le dispositif possède un connecteur grâce auquel le joueur peut connecter au dispositif selon l'invention une manette de jeu de l'unité de traitement numérique dont tout ou partie des signaux pourront être envoyés à l'unité de traitement numérique connectée au dispositif.

## Claims

1. A device for playing interactive soccer in combination with an image and sound system composing a soccer program operated on a digital processing unit,
**characterised in that** it includes a ball (1) relatively fixed to the ground, having a shape and a consistency similar to that of a soccer ball, sensors indicating the existence and the location on the surface of the ball of an impact hitting said ball, quantizing the intensity of said impact hitting said ball and the length of the travel of the leg of the user who hit said ball and a module transforming the information supplied by said sensors into control signals to the digital processing unit which the device according to the invention is connected to.

2. A device according to claim 1, **characterised in that** said ball is connected to a base positioned on the ground by means of an element providing an elastic and semi-rigid connection between the ball and the base.

3. A device according to claim 1 or 2, **characterised in that** the module is so arranged as to calculate one or more control signals, depending on the information supplied by the device sensors when an impact hits said ball and on the consistency of such information, then to transmit said signal or signals to the digital processing unit.

4. A device according to any one of the preceding claims, **characterised in that** the spectra of information from the sensors are divided into categories which sets of signals from the soccer program are associated to and **in that**, in order to determine the signal or the signals to be sent, the device module according to the invention crosses the sets associated to the categories which the information supplied by the sensors belong to.

5. A device according to any one of the preceding claims, **characterised in that** the means indicating that a force is exerted on the ball as well as the location area of said force on the surface of the ball is composed by at most three impact or acceleration sensors positioned at the centre of the ball, so that information they supply makes it possible to reconstruct the force exerted on the surface of the ball in the form of a vector.

6. A device according to the preceding claim, **characterised in that** the surface of the ball (1) is provided with four areas (2), (3), (4) and (5) for locating the application of the force exerted on the ball and **in that** such areas are independent and partition the surface of the ball (1).

7. A device according to any one of the preceding claims, **characterised in that** the location area of the force exerted on the ball is detected by sensors measuring the inclination of the ball with respect to the vertical axis thereof.

8. A device according to any one of the preceding claims, **characterised in that** the means indicating the travel of the leg which hit the ball is composed of one or several light beam emitters located behind the player and one or several light beam receivers positioned in front of said emitters, signalling an interruption of the light beams thereof more particularly caused by the player's leg passing in front of them, depending on the amplitude of the user's motion.

9. A device according to any one of the preceding claims, **characterised in that** the means quantizing the intensity with which the player's foot hits the ball is one or several impact or vibration sensor(s) (22) positioned in the ball.

10. A device according to any one of claims 1 to 8, **characterised in that** the means quantizing the intensity with which the player's foot hit the ball and identifying the location area of said force on the surface of the ball is composed of one or several sensor(s) the response of which is relative to the pressure which is applied thereto, positioned around the vertical axis of the ball on a surface pressed by the ball when the latter is inclined due to a force exerted thereon.

11. A device according to any one of the preceding claims, **characterised in that** the module is so arranged as to emit the signal triggered by the hitting of the ball for a time which is all the longer as the intensity with which the ball is hit is high.

12. A device according to any one of the preceding claims, **characterised in that** the module is so arranged as to estimate a "duration of the pressure of a force on the ball" estimated as a time greater than a minimum duration during which the location sensors of a force exerted on the ball are activated without any interruption.

13. A device according to any one of the preceding claims, **characterised in that** the module is so arranged as to take into account, when designing the control signals from the sensors information, the consistency between the amplitude of the travel of the leg which hit the ball and the intensity with which the ball is hit and in case of discrepancy, the module is so arranged as to transmit a signal corresponding to a feint in the soccer program.

14. A device according to any one of the preceding claims, **characterised in that** the module is so arranged as to emit the signal to the digital processing unit connected to the device as long as the force having triggered the emission of said signal is exerted on the ball.

15. A device according to claims 12, 13 or 14, **characterised in that** the module is so arranged as to emit to the digital processing unit a specific signal so long as a pressure is exerted on the ball, which signal can be different from the signal of the force initiating said pressure.

16. A device according to any one of the preceding claims, **characterised in that** the ball is servo-controlled by a mat (11) provided with surfaces sensitive to pressure which the player can press with his or her feet in order to send additional signals to the soccer program.

17. A device according to any one of the preceding claims, **characterised in that** the device is completed with a handle (16) provided with various keys sending signals to the digital processing unit connected to the device.

18. A device according to the preceding claim, **characterised in that** the actuating of one or several key or keys on the handle (16) changes the signal sent to the digital processing unit resulting from an action on the ball.

19. A device according to any one of the preceding claims, **characterised in that** the device has a connector with which the player can connect to the device according to the invention a joystick of the digital processing unit, all or part of the signal of which can be sent to the digital processing unit connected to the device.

## Patentansprüche

1. Vorrichtung für das Ausüben von interaktivem Fußball in Verbindung mit einem Bildgebungs- und Tonsystem, das aus einem Fußballprogramm besteht, welches auf einer digitalen Verarbeitungseinheit arbeitet,
**dadurch gekennzeichnet, dass** es einen relativ zum Boden befestigten Ball (1) umfasst, der eine Form und eine Konsistenz aufweist, die an die eines Fußballs erinnern, Sensoren, die das Vorhandensein und die Lokalisierung eines auf den genannten Ball ausgeübten Tritts auf der Oberfläche des Balls anzeigen und die Intensität des genannten Tritts auf den genannten Ball sowie die Länge des Hubs des Beins des Benutzers quantifizieren, das den genannten Ball getreten hat, und ein Modul, das die von diesen Sensoren gelieferten Informationen in Befehlssignale umwandelt, die für die digitale Verarbeitungseinheit bestimmt sind, an die die erfindungsgemäße Vorrichtung angeschlossen ist.

2. Vorrichtung gemäß Anspruch 1, **dadurch gekennzeichnet, dass** der Ball durch ein Element an einen am Boden ruhenden Sockel angeschlossen ist, das eine elastische und halbsteife Verbindung zwischen dem Ball und dem Sockel herstellt.

3. Vorrichtung gemäß Anspruch 1 oder 2, **dadurch gekennzeichnet, dass** das Modul angeordnet ist, um ein oder mehrere Befehlssignale in Abhängigkeit von den Informationen, die von den Sensoren der Vorrichtung geliefert werden, wenn ein Tritt auf den Ball angewendet wird und die Kohärenz dieser Informationen untereinander zu berechnen und dann das Signal oder die Signal(e) auf die digitale Verarbeitungseinheit zu übertragen.

4. Vorrichtung gemäß einem der vorherigen Ansprüche, **dadurch gekennzeichnet, dass** die Informationsspektren der Sensoren in Kategorien unterteilt sind, denen Signalgruppen des Fußballprogramms zugeordnet sind und dass zur Bestimmung des zu versendenden Signals oder der zu versendende Signale das Modul der erfindungsgemäßen Vorrichtung nach Abschnitten der Gruppen vorgeht, die den Kategorien zugeordnet sind, zu denen die von den Sensoren gelieferten Informationen gehören.

5. Vorrichtung gemäß einem der vorherigen Ansprüche, **dadurch gekennzeichnet, dass** das Mittel, welches anzeigt, dass eine Kraft auf den Ball ausgeübt wird, sowie der Bereich zur Lokalisierung der genannten Kraft auf der Oberfläche des Balls durch höchstens drei Aufprall- oder Beschleunigungssensoren gebildet werden, die im Zentrum des Balls derart angeordnet sind, dass die Informationen, die sie liefern, die vektorbezogene Wiederherstellung der auf die Oberfläche des Balls ausgeübten Kraft zulassen.

6. Vorrichtung gemäß dem vorherigen Anspruch, **dadurch gekennzeichnet, dass** die Oberfläche des Balls (1) mit vier Bereichen (2), (3), (4) und (5) zur Lokalisierung der Anwendung der auf den Ball ausgeübten Kraft versehen ist und dass diese Bereiche unabhängig sind und die Oberfläche des Balls (1) aufteilen.

7. Vorrichtung gemäß einem der vorherigen Ansprüche, **dadurch gekennzeichnet, dass** der Bereich zur Lokalisierung der auf den Ball ausgeübten Kraft durch Sensoren erfasst wird, die die Neigung des Balls relativ zu seiner vertikalen Achse messen.

8. Vorrichtung gemäß einem der vorherigen Ansprüche, **dadurch gekennzeichnet, dass** das Mittel, welches den Weg des Beins anzeigt, das den Ball getreten hat, durch einen oder mehrere Lichtstrahlensender realisiert wird, der / die sich hinter dem Spieler befindet / befinden und einen oder mehrere Lichtstrahlempfänger, der / die sich gegenüber den genannten Sendern befindet / befinden, die eine Unterbrechung ihrer Lichtstrahlen signalisieren, welche insbesondere durch den Durchgang des Beins des Spielers gemäß der Amplitude seiner Bewegung verursacht wird.

9. Vorrichtung gemäß einem der vorherigen Ansprüche, **dadurch gekennzeichnet, dass** das Mittel, welches die Intensität des Tritts des Fußes des Spielers auf den Ball quantifiziert, ein oder mehrere Aufprall- oder Vibrationssensor(en) (22) ist, das / die in dem Ball untergebracht ist / sind.

10. Vorrichtung gemäß Anspruch 1 bis 8, **dadurch gekennzeichnet, dass** das Mittel, welches die Intensität des Tritts des Fußes des Spielers auf den Ball quantifiziert und den Lokalisierungsbereich der genannten Kraft auf die Oberfläche des Balls identifiziert, aus einem oder mehreren Sensor(en) gebildet wird, dessen / deren Reaktion relativ zu dem Druck ist, der auf sie angewendet wird, die um die vertikale Achse des Balls auf einer Oberfläche platziert sind, die von dem Ball gedrückt wird, wenn dieser aufgrund einer auf ihn ausgeübten Kraft geneigt wird.

11. Vorrichtung gemäß einem der vorherigen Ansprüche, **dadurch gekennzeichnet, dass** das Modul angeordnet ist, um das Signal zu übertragen, das durch einen Tritt auf den Ball während einer Zeit ausgeübt wird, die umso länger ist, als die Intensität des auf den Ball ausgeübten Tritts hoch ist.

12. Vorrichtung gemäß einem der vorherigen Ansprüche, **dadurch gekennzeichnet, dass** das Modul angeordnet ist, um eine "Druckzeit einer Kraft auf den Ball" zu bewerten, die als eine Periode bewertet wird, die länger ist als eine Mindestdauer, während derer die Sensoren zur Lokalisierung einer auf den Ball ausgeübten Kraft ohne Unterbrechung aktiv waren.

13. Vorrichtung gemäß einem der vorherigen Ansprüche, **dadurch gekennzeichnet, dass** das Modul angeordnet ist, um bei der Ausarbeitung der Befehlssignale ausgehend von den Informationen der Sensoren die Kohärenz zwischen der Länge des Weges des Beins zu berücksichtigen, das den Ball getreten hat, und die Intensität des Tritts auf den Ball, und dass im Falle einer Diskordanz das Modul angeordnet ist, um ein Signal zu übertragen, das einer Finte im Fußballprogramm entspricht.

14. Vorrichtung gemäß einem der vorherigen Ansprüche, **dadurch gekennzeichnet, dass** das Modul angeordnet ist, um ein Signal an die digitale Verarbeitungseinheit zu übertragen, die an die Vorrichtung angeschlossen ist, solange auf den Ball die Kraft angewendet wird, die die Ausgabe des genannten Signals ausgelöst hat.

15. Vorrichtung gemäß Anspruch 12, 13 oder 14, **dadurch gekennzeichnet, dass** das Modul angeordnet ist, um ein spezifisches Signal auf die digitale Verarbeitungseinheit zu übertragen, solange ein Druck auf den Ball ausgeübt wird, wobei das Signal von dem Signal des initiierenden den genannten Druck initiierenden Tritts unterschiedlich sein kann.

16. Vorrichtung gemäß einem der vorherigen Ansprüche, **dadurch gekennzeichnet, dass** der Ball einer Matte (11) zugeordnet ist, die mit auf den Druck sensiblen Oberflächen versehen ist, den der Spieler mit seinem Füßen ausüben kann, um zusätzliche Signale zum Fußballprogramm auszusenden.

17. Vorrichtung gemäß einem der vorherigen Ansprüche, **dadurch gekennzeichnet, dass** die Vorrichtung durch einen Griff (16) vervollständigt wird, der mit unterschiedlichen Knöpfen ausgestattet ist, welche Signale zur an die Vorrichtung angeschlossenen digitalen Verarbeitungseinheit senden.

18. Vorrichtung gemäß einem der vorherigen Ansprüche, **dadurch gekennzeichnet, dass** die Betätigung eines Knopfes oder mehrerer Knöpfe des Griffs (16) das an die digitale Verarbeitungseinrichtung aufgrund einer Aktion auf den Ball versandte Signal verändert.

19. Vorrichtung gemäß einem der vorherigen Ansprüche, **dadurch gekennzeichnet, dass** die Vorrichtung einen Steckverbinder besitzt, mit dem der Spieler an die erfindungsgemäße Vorrichtung einen Joystick der Verarbeitungseinheit anschließen kann, von dem alle oder ein Teil der Signale an die digitale Verarbeitungseinheit gesandt werden können / kann, die an die Vorrichtung angeschlossen ist.
